# EUROPÄISCHE PATENTSCHRIFT

(11) **EP 1 497 067 B1**
(45) Veröffentlichungstag und Bekanntmachung des Hinweises auf die Patenterteilung: **24.01.2007**
(21) Anmeldenummer: 04728162.1
(22) Anmeldetag: 19.04.2004
(51) Int. Cl.: B23G 7/00, B23G 5/18, B23G 1/34

(54) **VERFAHREN ZUR HERSTELLUNG VON GEWINDEN**
METHOD FOR THE PRODUCTION OF THREADS
PROCEDE POUR LA REALISATION DE TARAUDAGES

(30) Priorität: 22.04.2003 DE 10318203
(43) Veröffentlichungstag der Anmeldung: 19.01.2005
(60) Teilanmeldung: 05024541.4
(73) Patentinhaber: GÜHRING, Jörg, 72458 Albstadt (DE)
(72) Erfinder: MANN, Jürgen, 72459 Albstadt-Laufen (DE)
(74) Vertreter: Winter, Brandl, Fürniss, Hübner Röss, Kaiser, Polte Partnerschaft Patent- und Rechtsanwaltskanzlei
(86) Internationale Anmeldenummer: PCT/EP2004/004150
(87) Internationale Veröffentlichungsnummer: WO 2004/094094

(56) Entgegenhaltungen:
- EP-A- 0 429 917
- EP-A- 1 354 984
- WO-A-96/07502
- WO-A-02/094491
- CH-A- 494 611
- DE-A- 2 300 625
- DE-A- 3 934 621
- DE-A- 10 210 839
- DE-A- 19 927 386
- GB-A- 563 402
- US-A- 5 076 744
- US-A- 5 429 459
- PATENT ABSTRACTS OF JAPAN Bd. 2003, Nr. 07, 3. Juli 2003 (2003-07-03) -& JP 2003 071610 A (KOBE STEEL LTD), 12. März 2003 (2003-03-12)
- PATENT ABSTRACTS OF JAPAN Bd. 016, Nr. 394 (C-0976), 21. August 1992 (1992-08-21) -& JP 04 128363 A (RAIMUZU:KK), 28. April 1992 (1992-04-28)

## Beschreibung

Die Erfindung betrifft ein Verfahren zur Herstellung von Innengewinden, gemäß dem Oberbegriff des Anspruchs 1.

Es sind verschiedene Methoden zur Herstellung von sogenannten Muttergewinden, d.h. Innengewinden bekannt. Weit verbreitet ist das Gewindeschneiden, bei dem ein Gewindebohrwerkzeug, das mit Schneidstollen und Spannuten ausgestattet ist, mit dem durch die Steigung des Werkzeugs vorbestimmtem Vorschub und synchronisierter Drehzahl in eine Werkstückbohrung mit vorbestimmtem Kernmaß eingefahren wird. Dabei erfolgt eine spanabhebende Bearbeitung des Werkstücks.

Um insbesondere in den tragenden Gewindeflanken eine höhere Festigkeit zu erzielen, wendet man das sogenannte Gewindeform-Verfahren an, bei dem ein Gewindeformer oder Gewindefurcher - auch Gewindedrücker genannt - zum Einsatz kommt und mit dem der Werkstoff kalt verformt wird, ohne dass - wie beim Gewindeschneiden - der sogenannte "Faserverlauf" im Werkstoff unterbrochen wird. Ein wesentlicher Vorteil im Vergleich zum Gewindeschneiden besteht ferner darin, dass beim Gewindeformen keine Späne entstehen.

Beim Gewindeformen wird ein schraubenförmiger, zur Ausbildung von Drückstollen mit einem Polygon versehener Gewindeteil mit einem gleichmäßigen, der Steigung des Gewindes entsprechenden Vorschub in das vorgebohrte Werkstück eingeschraubt. Dabei drückt sich das Gewindeprofil stufenweise über den Anlauf des Gewindeteils in den Werkstoff des Werkstücks, wodurch in der Stauchzone die Spannung so hoch wird, dass die Stauchgrenze überschritten und der Werkstoff plastisch verformt wird. Das Material weicht radial aus, fließt entlang des Gewindeprofils in den freien Zahngruhd und bildet so den Kerndurchmesser des Muttergewindes. Der Ausformgrad des Gewindes lässt sich über den Vorbohrdurchmesser steuern.

Der besondere Vorteil besteht darin, dass die erzielbare Gefügeverbesserung dazu führt, dass die Belastbarkeit des Gewindes auch bei 50 % Tragtiefe noch ausreichend ist. Weil für dieses Verfahren die Schmierung von entscheidender Bedeutung ist, müssen aber im Werkzeug zwischen den Drückstollen Schmiernuten ausgebildet werden.

Ein Nachteil dieses Verfahrens besteht darin, dass für jedes Gewinde ein entsprechend dem Gewindedurchmesser gesondertes Formwerkzeug erforderlich ist, die Geometrie des Anlaufs zur Steuerung der Arbeitsleistung des Gewindeformers relaiv schwer zu optimieren ist, und die Schnittgeschwindigkeits- und Vorschubwerte nicht unabhängig voneinander gewählt werden können.

Schließlich ist es bekannt, Innengewinde zu fräsen. Hier wird das Gewinde durch die Aneinanderreihung der Schnittlinien des Gewindefräsers erzeugt. Die Gewindesteigung wird durch die Maschine realisiert, sie entspricht der sogenannten "Teilung" des Gewindefräsers, d.h. dem axialen Abstand der Fräser-Zahnreihen.

Ein wesentlicher Vorteil dieses Verfahrens besteht darin, dass sich mit ein und demselben Fräser Gewinde mit verschiedenen Durchmessern und gleicher Steigung herstellen lassen. Im Vergleich zu geschnittenen Gewinden ergibt sich der weitere Vorteil, dass das gefräste Gewinde über nahezu die gesamte eingesetzte Werkzeuglänge voll ausgebildet ist. Von Nachteil ist bei diesem Herstellungsverfahren, dass aufgrund der zerspanenden Bearbeitung das Gefüge im Bereich der geschnittenen Zähne quasi zerstört wird, wodurch die Tragkraft des Gewindes beschränkt bleibt.

Ein Verfahren mit den Merkmalen des Oberbegriffs des Anspruchs 1 ist aus der WO 02/094491 A1 bekannt. Beschrieben wird im Besonderen ein Verfahren zur Herstellung eines Innengewindes mittels eines drehangetriebenen, im Querschnitt polygonförmigen Gewindeformwerkzeugs. Das Gewindeformwerkzeug soll eine kreisförmige Bewegung entlang des Umfangs einer Bohrungsöffnung ausführen, während es sich um seine eigene Achse dreht, und mit einer vorbestimmten Rate/Geschwindigkeit pro Umlauf entlang des Umfangs der Bohrungsöffnung in diese hinein, d.h. axial, vorgeschoben werden.

Des Weiteren wird in der WO 96/07502 A1 ein Verfahren zur Herstellung eines Innengewindes gezeigt und beschrieben, bei dem zur Ausbildung eines Gewindes ein um seine Achse drehender Gewindefräser auf einer Spiralbahn radial nach außen in das Werkstück bewegt wird.

Der Erfindung liegt deshalb die Aufgabe zugrunde, ein Verfahren zur Herstellung von Innengewinden bereit zu stellen, mit dem Gewinde unterschiedlicher Nenndurchmesser besonders wirtschaftlich und mit verbesserter Gefügequalität im Bereich des Gewindes hergestellt werden können.

Diese Aufgabe wird durch ein Verfahren mit den Merkmalen des Anspruchs 1 gelöst.

Das Gewinde wird mittels eines Werkzeugs quasi in die Innenoberfläche der Werkstückbohrung "gehämmert". Das Werkzeug hat einen Formkopf, der die Gestaltungsmerkmale eines Gewindefräsers mit denjenigen eines Gewindeformers kombiniert, und zwar derart, dass der Formkopf mit zumindest einem, vorzugsweise aber zumindest zwei nach der Art eines Gewindefräsers ausgebildeten und in konstantem axialen Abstand zueinander stehenden Profilvorsprüngen bzw. Zähnen ausgestattet wird, die über den Umfang durchgehend, aber mit sich über den Umfang verändernder radialer Erstreckung ausgebildet sind, so dass im Bereich eines jeden Profilvorsprungs über den Umfang zumindest ein Drückstollen ähnlich wie bei einem Gewindeformer entsteht.

Es hat sich gezeigt, dass die bei dieser Art der spanlosen Bearbeitung mit Fräskinematik auf den Schaft des Werkzeugs einwirkenden Radialkräfte ohne weiteres ohne übermäßige radiale Auslenkung des Formkopfs aufgenommen werden können, und zwar selbst dann, .wenn der Formkopf eine Vielzahl von Profilvorsprüngen hat und damit in der Lage ist, selbst relativ lange Gewinde mit einer Zirkularbewegung herzustellen. Denn schon allein über die Drehzahl des Formkopfs und die davon unabhängige Geschwindigkeit der Zirkularbewegung des Werkzeugs lässt sich die von einem Drückstollen zu leistende Verformungsarbeit einfach steuern und damit ausreichend klein halten, um den Schaft des Werkzeugs nicht übermäßig beanspruchen zu müssen. Weitere Möglichkeiten der Eingrenzung der auf den Formkopf einwirkenden Radialkräfte bestehen darin, die Zahl der Drückstollen pro Profilvorsprung zu variieren und/oder die Drückstollen benachbarter Profilvorsprünge in Umfangsrichtung zu versetzen.

Neben der Sicherstellung einer verbesserten Tragkraft des Gewindes aufgrund besserer Gefügestrukturen hat dieses Konzept der Gewindeherstellung den zusätzlichen Vorteil, dass über eine Maschinensteuerung die Möglichkeit geschaffen wird, auf die DurchmesserToleranzen im Bereich des Nenn- und/oder des Flankendurchmessers bei der Herstellung Einfluss zu nehmen. Ein weiterer wesentlicher Vorteil des Konzepts dieser Gewindeherstellung besteht darin, dass keine Späne entstehen.

Da die radial nach außen gerichtete Bewegung des Formkopfs entlang einer 180°-Einfahrschleife erfolgt, so dass die bogenförmige Kurve beim Eintreten der Profilvorsprünge in das Werkstück eine Bewegungskomponente in Richtung der sich anschließenden Zirkularbewegung hat, wird die Werkzeugbelastung beim Eintauchen das Werkstück am niedrigsten.

Vorteilhafte Weiterbildungen sind Gegenstand der Unteransprüche.

Die Weiterbildung des Anspruchs 2 hat den Vorteil, dass die Einfahrberwegung zur Zentrierung des Werkzeugs genutzt werden kann und dass die Einformung des Gewindes mit einer einzigen Zirkularbewegung fertig gestellt werden kann.

Wenn die Profilvorsprünge, d.h. die geometrische Auslegung des Polygons, mit der sich über den Umfang ändernden radialen Erstreckung über den Umfang jeweils mehrere Drückstollen ausbilden, wird die Effektivität des Werkzeugs gesteigert.

Die Drückstollen können über den Umfang gleichmäßig, aber auch ungleich verteilt sein, was den Vorteil der Verringerung der Schwingungsneigung hat.

Wenn die Drückstollen axial benachbarter Profilvorsprünge in Umfangsrichtung zueinander versetzt sind, zum Beispiel in Form einer Wendel, kann die Gesamt-Radialkraft, die beim Drückvorgang des Innengewindes auf den Formkopf einwirkt, weiter verringert werden.

In diesem Fall ist es von herstellungstechnischem Vorteil, wenn die axial benachbarten Drückstollen des Formkopfs jeweils entlang einer Wendel liegen.

Die Verfahrensparameter können entsprechend dem zu bearbeitenden Werkstoff in weiten Grenzen optimiert werden. Durch die Kinematik der Ansprüche 8 und 9 lassen sich in Verbindung mit wechselnder axialer Vorschubbewegung des Werkzeugs links- bzw. rechtsgängige Gewinde mit ein und demselben Werkzeug herstellen.

Weitere vorteilhafte Ausgestaltungen der Erfindung sind Gegenstand der übrigen Unteransprüche.

Nachstehend wird anhand schematischer Zeichnungen ein Ausführungsbeispiel der Erfindung näher erläutert. Es zeigen:
Figur 1 eine schematische Seitenansicht eines Werkzeugs zur Einformung eines Innengewindes nach dem erfindungsgemäßen Verfahren;
Figur 2 den schematischen Schnitt gemäß II-II in Figur 1;
Figur 3 eine schematische perspektivische Ansicht einer Variante des für das Werkzeug verwendeten Formkopfs als Rohling vor dem Einbringen von Gewindeprofilvorsprüngen;
Figur 4 eine Darstellung zur Verdeutlichung, wie die einzelnen Arbeitsschritte zur Ausführung des erfindungsgemäßen Verfahrens aneinander gereiht werden; und
Figur 5 eine schematische Ansicht zur Veranschaulichung einer erfindungsgemäßen Einfahrschleife für das Formwerkzeug.

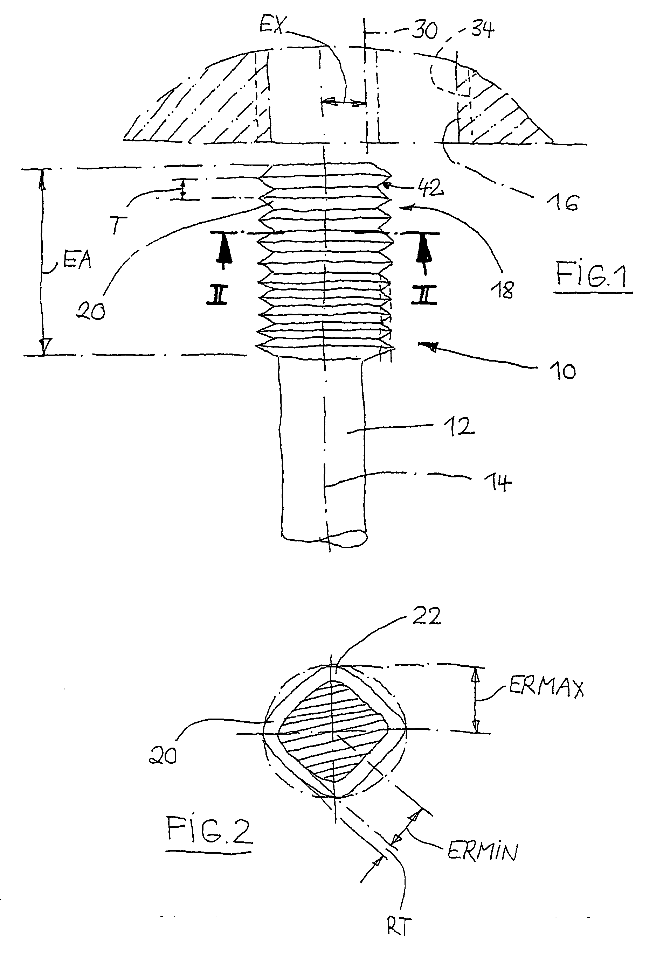

In den Figuren 1 und 2 ist schematisch ein Werkzeug gezeigt, mit dem das erfindungsgemäße Verfahren zur Herstellung von Gewinden, insbesondere von Innengewinden, durchgeführt werden kann.

Es handelt sich um einen um eine Schaftachse 14 drehantreibbaren Gewindeformer 10, mit dem die Gewindegänge spanlos durch Druckumformung aus der Oberfläche des Werkstücks, nämlich aus der Innenoberfläche einer Werkstückbohrung, die in Figur 1 mit strichpunktierter Linie 16 angedeutet ist, heraus getrieben wird.

Das Werkzeug 10 hat einen Schaft 12 und einen Formkopf 18.

Der Formkopf 18 hat eine Vielzahl von nach der Art eines Gewindefräsers ausgebildeten und in konstantem axialen Abstand T (Teilung) zueinander stehenden Profilvorsprüngen 20, die - wie sich aus der Figur 2 ersehen lässt - über den Umfang durchgehend sind. Sie haben - wie ebenfalls aus Figur 2 erkennbar - eine sich über den Umfang verändernde radiale Erstreckung, die zwischen ERMAX und ERMIN liegt, so dass im Bereich eines jeden Profilvorsprungs 20 über den Umfang zumindest ein Drückstollen 22 (bei der Ausführungsform nach Figur 1 und 2 sind es vier Drückstollen 22) entsteht.

Die Profilvorsprünge 20 sind axial zueinander um das Maß der herzustellenden Gewindsteigung versetzt, d.h. das Maß T entspricht der Gewindesteigung des herzustellenden Gewindes.

Man erkennt aus der Darstellung der Figur 2, dass der Kernquerschnitt des Formkopfs 18 eine Polygonform hat und dass die radiale Tiefe RT der Profilvorsprünge 20 über den gesamten Umfang im Wesentlichen gleich bleibt. Es soll aber bereits an dieser Stelle hervor gehoben werden, dass dieses Detail nicht unabdingbar ist. Auch kann die Umfangskontur des Kernquerschnitts und/oder die Kontur der Einhüllenden der Profilvorsprünge 20 ohne weiteres variiert werden, so lange die Funktion der Drückstollen 22 aufrecht erhalten bleibt.

Der Formkopf 18 hat eine axiale Erstreckung EA, die im Wesentlichen der Länge TG (siehe Position 4.5 der Figur 4) des zu erzeugenden Gewindes entspricht.

Man erkennt aus der Figur 2, dass die Drückstollen 22 über den Umfang gleichmäßig verteilt sind. Sie können aber auch ungleich verteilt sein, um die Schwingungsneigung des Werkzeugs zu verringern.

Das Herstellungsverfahren unter Zuhilfenahme des erfindungsgemäßen Gewindeformwerkzeugs wird unter Bezug auf die Figur 4 näher beschrieben:

Das Gewinde wird dadurch gebildet, dass das nach der Art eines Gewindefräsers mit den zumindest zwei in konstantem Abstand T zueinander stehenden Profilvorsprüngen 20 ausgestattete Schaftwerkzeug 10 in Drehbewegung versetzt und - wie in Fig. 4A auf der linken Seite unter Position 4.1 dargestellt - zentrisch oberhalb der Werkstückbohrung 16 positioniert wird. Das Werkzeug 10 kann so ausgebildet sein, dass im Übergangsbereich zum Schaft 12 eine Schneide 24 zur Anbringung einer Fase 26 vorhanden ist, was in der Position 4.2. angedeutet ist.

Anschließend wird das Werkzeug 10 axial so weit aus dem Zentrum parallel zu sich selbst heraus gefahren, bis die Werkzeugspitze 28 - wie in Position 4.3 gezeigt - das Sollmaß TG der Gewindetiefe erreicht hat. Dann erfolgt die radiale Zustellung des Werkzeugs 10, und zwar in der Weise, dass es - wie in Position 4.4 gezeigt - zunächst an einer Umfangsstelle SU eine Radialposition erreicht, die für das Eindrücken des Gewindes unter plastischer Verformung des Werkstücks auf Sollmaß des Flanken- und/oder Nenndurchmessers erforderlich ist. Dieses Maß wird in der Regel empirisch bestimmt und hängt u.a. von den Werkstoffparametern (Fließverhalten) des Werkstücks und den Parametern des Formvorgangs ab.

Die Bahn, auf der das Werkzeug 10 aus dem Zentrum der Werkstückbohrung 16 heraus in die Position SU gebracht wird ist mit dem Pfeil ES bezeichnet. Diese Kurve beschreibt quasi eine Art Einfahrschleife, auf die später noch näher eingegangen werden soll.

Nachdem das Werkzeug 10 somit auf volle Bearbeitungs- bzw. Gewindetiefe gebracht ist, führt es unter Beibehaltung der zur Achse 30 der Werkstückbohrung 16 eingestellten Exzentrizität EX der Drehachse 14 eine 360° durchlaufende Kreisbewegung (Zirkularbewegung BZ, siehe Pfeil in Position 4.5) um die Achse 30 der Werkstückbohrung 16 aus, während der Formkopf 18 gleichzeitig eine konstante axiale Vorschubbewegung BV um das Maß der herzustellenden Gewindsteigung P ausführt. Dabei wird das Material des Werkstücks durch die sukzessive in Eingriff tretenden Drückstollen quasi einer kontinuierlichen Druckumformung nach der Art einer Hämmerbearbeitung unterworfen, die das Material zum Fließen bring, so dass es gesteuert in die Nuten 42 zwischen den Profilvorsprüngen 20 eindringen kann. Das Gewinde erhält auf diese Weise eine ähnliche Qualität und Geometrie im Bereich der Gewindezähne wie beim Gewindeformen.

Wenn diese Zirkularbewegung (BZ) abgeschlossen ist, ist das Gewinde fertig eingeformt. Durch Korrektureingriffe im Bereich der Steuerung für die Zirkularbewegung kann während des Ausformvorgangs gezielt und laufend Einfluss auf die Toleranz des Flanken- und des Nenndurchmessers genommen werden, was der Einsatzdauer des Werkzeugs 10 zugute kommt.

Wenn das Werkzeug 10 die Position SU wieder erreicht hat, wird es auf einer Kurve AS radial nch innen gefahren - wie in Position 4.6 gezeigt -, so dass die Profilvorsprünge 20 des Formkopfs 18 außer Eingriff mit dem hergestellten Innengewinde 34 gelangen.

Anhand der Figuren 1 bis 4 ist das Verfahren zum "spanlosen Gewindefräsen" mittels eines Werkzeugs 10 beschrieben worden, das eine sich in axialer Richtung unveränderten Querschnitt hat. Damit kommen die Drückstollen 22 aller Profilvorsprünge 20 jeweils gleichzeitig in Eingriff mit dem zu verdrängenden Werkstoff des Werkstücks. Zur Beherrschung der dadurch auftretenden und vom Schaft 12 des Werkzeugs 10 aufzunehmenden Kräfte wird der Vorschub in Zirkularrichtung derart auf die Drehzahl des Werkzeugs abgestimmt, dass die Verformungsarbeit der im Eingriff befindlichen Drückstollen 22 möglichst klein bleibt.

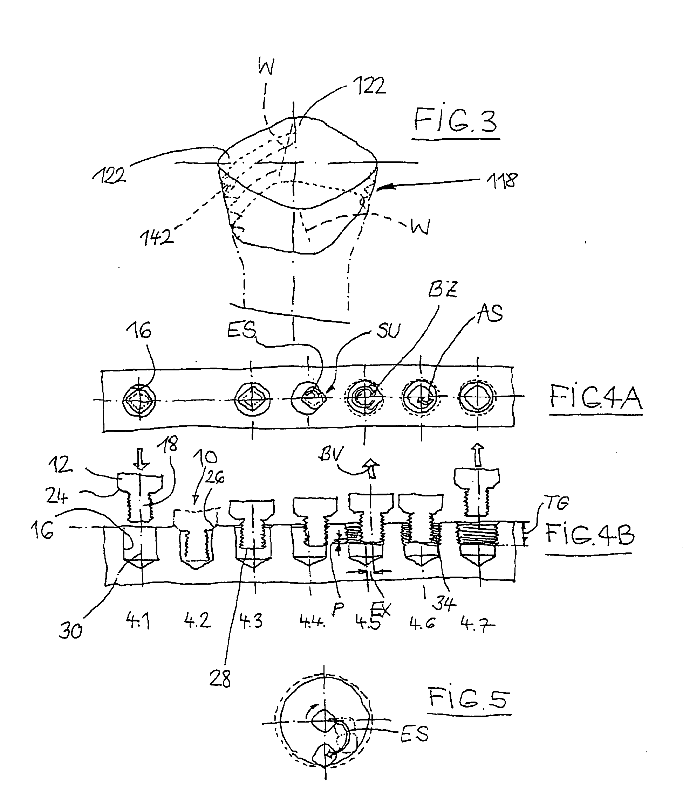

Um diese Kräfte noch gleichmäßiger auf das Werkzeug 10 einbringen zu können, können - entsprechend der Weiterbildung nach Figur 3 - die Drückstollen 122 benachbarter Profilvorsprünge in Umfangsrichtung zueinander versetzt sein. Vorteilhafter Weise liegen die axial benachbarten Drückstollen 122 des Formkopfs 118 jeweils entlang einer Wendel, die in Figur 3 mit der gestrichelten Linie W angedeutet ist. Mitr anderen Worten, die Figur 3 zeigt einen vorgefertigten oder vorbearbeiteten Rohling für eine Formkopf 118, in den dann die Profilnuten 142 eingearbeitet werden, um den Formkopf fertig zu stellen.

Figur 5 schließlich zeigt in etwas vergrößertem Maßstab ein Detail der Ausbildung der Einfahrschleife ES. Man erkennt, dass die Bewegung entlang einer durch 180° geführten Kreisbewegung erfolgt, was sich positiv auf die Werkzeugbelastung auswirkt. Es ist jedoch - insbesondere bei größerer Durchmesserdifferenz zwischen Werkzeug und Gewinde gleichermaßen vorteilhafte, eine Viertelkreiseinfahrschleife zu wählen, die leichter zu programmieren ist.

Das vorstehend beschriebene Werkzeug kann gleichermaßen für die Herstellung von Rechts-, wie von Linksgewinden verwendet werden, wobei diesbezüglich nur die Vorschubrichtung BV und ggf. die Drehrichtung des Werkzeugs umgekehrt werden muß, so dass im Gleichlauf- und/oder Gegenlauf verformt werden kann.

Zur zusätzlichen Verbesserung der Bearbeitungsqualität kann der Formkopf zumindest im Bereich der am höchsten beanspruchten Abschnitte, d.h. im Bereich der Drückstollen 22, 122 mit einer Beschichtung versehen sein, die vorzugsweise als Hartstoffschicht ausgebildet ist. Für diese Hartstoffschicht kommt z.B. Diamant, vorzugsweise nanokristalliner Diamant in Frage, Titan-Nitrid- oder Titan-Aluminium-Nitrid. Besonders geeignet sind u.a. eine Titan-Aluminium-Nitrid-Schicht und eine sogenannte Mehrlagen-Schicht, die unter der Bezeichnung "Fire I" von der Firma Gühring oHG vermarktet wird. Dabei handelt es sich um eine TiN-/(Ti,Al)N-Mehrlagen-Schicht.

Besonders bevorzugt kann es sich hier um eine Verschleißschutzschicht handeln, die im wesentlichen aus Nitriden mit den Metallkomponenten Cr, Ti und Al und vorzugsweise einem geringen Anteil von Elementen zur Kornverfeinerung besteht, wobei der Cr-Anteil bei 30 bis 65 %, vorzugsweise 30 bis 60 %, besonders bevorzugt 40 bis 60 %, der Al-Anteil bei 15 bis 80 %, beispielsweise 15 bis 35 % oder 17 bis 25 %und der Ti-Anteil bei 16 bis 40 %, vorzugsweise 16 bis 35 %, besonders bevorzugt 24 bis 35 %, liegt, und zwar jeweils bezogen auf alle Metallatome in der gesamten Schicht. Dabei kann der Schichtaufbau eilagig sein mit einer homogenen Mischphase oder er kann aus mehreren in sich homogenen Lagen bestehen, die abwechselnd einerseits aus (TiₓAl_{y}Y_{z})N mit x = 0,38 bis 0,5 und y = 0,48 bis 0,6 und z = 0 bis 0,04 und andererseits aus CrN bestehen, wobei vorzugsweise die oberste Lage der Verschleißschutzschicht von der CrN-Schicht gebildet ist.

Der Formkopf 18, 118 und/oder der Schaft bzw. das das gesamte Werkzeug 10 der gezeigten Ausführungsbeispiele kann aus unterschiedlichsten Materialien bestehen, besonders vorteilhaft ist aber ein Material, das eine große Stabilität und Verschleißfestigkeit aufweist. Der Schaft des Werkzeugs sollte eine besonders hohe Biegefestigkeit haben, damit die radial auf den Formkopf 18, 118 einwirkenden Kräfte gut abgefangen werden können, was der Herstellungsgenauigkeit des Gewindes zugute kommt.

Auch bei dem hier vorliegenden Beanspruchungsprofil können die Kriterien Abriebverschleiß und Warmhärte von entscheidender Bedeutung sein, so dass auch Cermet-Sorten, wie z.B. ein Cermet der Sorte "HTX", das von der Firma Kennametal-Hertel vermarktet wird, gut eingesetzt werden kann. Gute Ergebnisse erzielt man darüber hinaus mit den Sorten "SC30" der Herstellerfirma Cerasiv GmbH (Feldmühle) und "Tungaly NS530" der Firma Toshiba Europa GmbH.

Besonders bevorzugt als Material für das Werkzeug ist die Verwendung eines Hartstoffs, wie z. B. eines Carbids, eines Nitrids, eines Borids oder eines nichtmetallischen Hartstoffs bzw. eines Hartstoffsystems, wie es beispielsweise auch in Form von Mischcarbiden, Carbonnitriden, Carbid-Borid-Kombinationen oder Mischkeramik und Nitridkeramik bekannt geworden ist. Dabei können auch diejenigen Hartstoffe eingesetzt werden, die als Sinter-Formteile herstellbar sind.

Der Formkopf 18, 118 besteht bei der Ausgestaltung nach den Figuren 1 bis 5 aus Vollhartmetall, er kann aber auch aus einem anderen Hartstoff, also auch beispielsweise aus einem Cermet-Sinter-Formteil hergestellt sein, in das die Geometrie des Formkopfs, d.h. die Polygonform des Kerns und/oder die Formrillen bereits vor dem Sintern eingebracht sind. Dies kann beispielsweise durch geeignete Formen beim Pressvorgang geschehen oder aber durch eine geeignete Nachbearbeitung des Sinterrohlings vor dem Sintervorgang. Damit kann also der Sinter-Rohling mit einem geringen Aufmaß bezogen auf den Nenndurchmesser vorgefertigt sein. Dabei genügt es beispielsweise, das Aufmaß im Bereich von etwa 0.5 mm bezogen auf die Endmaße zu beschränken. Es ist sogar möglich, die polygonform des Kernabschnitts des Formkopfs im Bereich zwischen den Polygonkanten bereits im Urformprozess mehr oder weniger auf Endmaß vor zu formen, so dass eine Schleif-Bearbeitung auf Endmaß in diesem Bereich nach dem Sintervorgang sogar entfallen kann. Ein Schleifen auf Endmaß ist somit lediglich noch im Bereich der Formzähne .. 18 erforderlich.

Aufgrund der sehr hohen Werte von Druckfestigkeit, Biegefestigkeit und E-Modul von Hartstoffen, insbesondere von Hartmetall oder Cermet, verformt sich der Schaft , wenn er aus derartigen Werkstoffen hergestellt ist, auch bei sehr großen Radialkräften, die über die gesamte Länges des Formkopfs einwirken, nur sehr geringfügig, so dass die Formgenauigkeit auch dann auf einem sehr guten Niveau gehalten werden kann, wenn besonders schwer zu verformende Werkstoffe bearbeitet werden.

Es hat sich gezeigt, dass auch der Werkstoff Cermet für den Formkopf 18, 118 besonders geeignet ist. Der Werkstoff hat eine geringe chemische Affinität zu Stahllegierungen, einen geringeren Wärmeleitkoeffizient, eine höhere Wärmhärte und ein verhältnismäßig feinkörniges Gefüge, so dass kleine Formkantenradien erzielbar sind. Der im Vergleich zu Hartmetall um den Faktor 7 kleinere Wärmeleitkoeffizient von Cermet bewirkt, dass die erzeugte Verformungswärme nicht unmittelbar in den Formkopf fließt und somit niedrigere Betriebstemperaturen am Werkzeug auftreten, was wiederum eine höhere Maßkonstanz über den gesamtem Formprozess ermöglicht.

Das Material für den Formkopf und/oder Schaft des Werkzeugs ist nicht auf eine bestimmte Hartstoff- , wie z.B. Cermet-Qualität beschränkt, die der Durchschnittsfachmann je nach Einsatzgebiet des Werkzeugs aus dem inzwischen breitgefächerten Angebot der Hartstoffe auswählt.

Insbesondere die Sorte "HTX" zeigt besonders hohe Standzeiten, d. h. einen sehr geringen Volumenverschleiß, gegenüber anderen Cermet-Sorten beim Formvorgang, insbesondere beim Formen ohne Schmierung. Der Sinterwerkstoff kann aber ebenso nach anderen Kriterien ausgewählt werden, wie z. B. nach der erwünschten Biegefestigkeit oder nach dem jeweiligen zu bearbeitenden Werkstoff. So hat sich beispielsweise für die Bearbeitung von Guss und Aluminium der Werkstoff Hartmetall in der sogenannten K-Qualität als besonders günstig bezüglich der erzielbaren Standzeit erwiesen.

Der Werkstoff für den Schaft kann entsprechend einer Variante auch so ausgewählt werden, dass sich eine geringe Schwingungsneigung ergibt. Hier können deshalb auch herkömmliche Vergütungsstähle und Werkzeugstähle zur Anwendung kommen, beispielsweise der Vergütungsstahl 42CrMo4 mit Zugfestigkeiten 1000 N/mm² < *sigma <* 1500 N/mm².

Die Kinematik der Bewegung des Werkzeugs bezüglich des Werkstücks kann selbstverständlich umgekehrt werden, so dass beispielsweise das Werkstück die Bewegung der Einfahrschleife und/oder der Zirkularbewegung ausführt.

Die Polygonform im Formkopf muß auch nicht zwingend bereits vor einem Sintervorgang eingebracht werden. Es ist gleichermaßen möglich, die Rohfrom des Kopfs mit seiner Polygonquerschnittsgesteltung und/oder der Profilvorsprünge nach dem Sintervorgang in den Schneidkopf einzubringen.

Der Formkopf bzw. das gesamte Werkzeug kann auch aus anderen Materialien bestehen, vorteilhafterweise aus einem hochfesten Werkstoff, wie z. B. aus Hartmetall, Schnellstahl wie z. B. HSS, HSSE oder HSSEBM, Keramik, Cermet oder aus einem anderen Sintermetall-Werkstoff.

Ferner ist es möglich, eine Kühl- und Schmiermittel-Versorgung - auch innenliegend - vorzusehen.

Die Erfindung ist ferner auch dann anwendbar, wenn die axiale Länge des zu formenden Gewindes die Länge des Formkopfes 18, 118 überschreitet. In diesem Fall wird die Bewegungskinematik der Figur 4 mehrfach hintereinander, d.h. mit axialer Staffelung der Gewindeformung durchgeführt.

## Patentansprüche

1. Verfahren zur Herstellung von Innengewinden, mittels eines drehangetriebenen Gewindewerkzeugs, mit dem die Gewindegänge (34) spanlos durch Druckumformung in und aus der Innenoberfläche (16) einer Werkstückbohrung heraus getrieben werden, wobei das Gewinde (34) **dadurch** gebildet wird, dass ein nach der Art eines Gewindefräsers mit zumindest einem Profilvorsprung (20), vorzugsweise zwei in konstantem Abstand (T) zueinander stehenden Profilvorsprüngen (20), ausgestattetes Schaftwerkzeug (10), bei dem der zumindest eine Profilvorsprung (20) an seinem Formkopf (18; 118) über den Umfang durchgehend und mit sich über den Umfang verändernder radialer Erstreckung (ERMIN, ERMAX) polygon ausgebildet ist, zunächst an einer Umfangsstelle (SU) der Werkstückbohrung (16) in das Werkstück eingefahren wird, vorzugsweise auf volle Gewindedrücktiefe gebracht wird, und im Wesentlichen unter Beibehaltung der zur Achse (30) der Werkstückbohrung (16) eingestellten Exzentrizität (EX) der Drehachse (14) eine 360° durchlaufende Relativ-Kreisbewegung (Zirkularbewegung BZ) bezüglich der Achse (30) der Werkstückbohrung (16) ausführt, während der Formkopf (18; 118) synchron eine konstante axiale Relativ-Vorschubbewegung um das Maß der herzustellenden Gewindsteigung (P) ausführt,
**dadurch gekennzeichnet, dass**
der Formkopf (18; 118) im Wesentlichen zentrisch in die Werkstückbohrung (16) auf das Maß der Gewindetiefe (TG) eingefahren wird, anschließend unter Beibehaltung der axialen Relativposition zur Werkstückbohrung (16) entlang einer Halb- oder Viertelkreiseinfahrschleife (ES) radial nach außen verfahren wird, bis er an einer Umfangsstelle (SU) auf Sollmaß des Flanken- und/oder Nenndurchmessers in das Werkstück eingedrückt ist, bevor die über 360° reichende Kreisbewegung (Zirkularbewegung BZ) bei gleichzeitigem Axialvorschub (BV) ausgeführt wird.

2. Verfahren nach Anspruch 1, **dadurch gekennzeichnet, dass** der Formkopf (18; 118) eine axiale Erstreckung (EA) hat, die der Länge (TG) des zu erzeugenden Gewindes entspricht.

3. Verfahren nach Anspruch 41 oder 2, **dadurch gekennzeichnet, dass** die bogenförmige Kurve beim Eintreten der Profilvorsprünge (20) in das Werkstück eine Bewegungskomponente in Richtung der sich anschließenden Zirkularbewegung (BZ) hat.

4. Verfahren nach einem der Ansprüche 1 bis 3, **dadurch gekennzeichnet, dass** die Profilvorsprünge (20) mit der sich über den Umfang ändernden radialen Erstreckung (ERMIN, ERMAX) über den Umfang jeweils mehrere Drückstollen (22) ausbilden.

5. Verfahren nach Anspruch 4, **dadurch gekennzeichnet, dass** die Drückstollen (22) über den Umfang ungleich verteilt sind.

6. Verfahren nach Anspruch 4 oder 5, **dadurch gekennzeichnet, dass** die Drückstollen (122) benachbarter Profilvorsprünge in Umfangsrichtung zueinander versetzt sind.

7. Verfahren nach Anspruch 6, **dadurch gekennzeichnet, dass** die axial benachbarten Drückstollen (122) des Formkopfs (118) jeweils entlang einer Wendel (W) liegen (Figur 3).

8. Verfahren nach einem der Ansprüche 1 bis 7, **dadurch gekennzeichnet, dass** die Umfangsgeschwindigkeit des Formkopfs (18; 118) im Eingriffsbereich mit dem Werkstück (16) mit der Zirkularbewegung synchronisiertist.

9. Verfahren nach einem der Ansprüche 1 bis 7, **dadurch gekennzeichnet, dass** die Umfangsgeschwindigkeit des Formkopfs (18; 118) im Eingriffsbereich mit dem Werkstück (16) der Zirkularbewegung entgegen gerichtet ist.

## Claims

1. Process for producing internal screw threads by means of a rotationally driven thread-forming tool, by which the thread turns (34) are forced into and out of the inner surface (16) of a workpiece bore by pressure-forming without any removal of material, the screw thread (34) being formed by a shank tool (10), which is equipped in the manner of a thread milling cutter, with at least one profile projection (20), preferably two profile projections (20) that are at a constant distance (T) from one another, and in which the at least one profile projection (20) is formed at its shaping head (18; 118) continuously over the circumference and polygonally with a radial extent (ERMIN, ERMAX) which varies over the circumference, first of all being introduced into the workpiece at a peripheral location (SU) of the workpiece bore (16), preferably being moved to the full thread-pressing depth, and executing a continuous 360° relative gyrating movement (circular movement BZ) with respect to the axis (30) of the workpiece bore (16) while substantially maintaining the eccentricity (EX) of the axis of rotation (14) which has been set with respect to the axis (30) of the workpiece bore (16), while the shaping head (18; 118) synchronously executes a constant axial relative advancing movement by the dimension of the thread lead (P) that is to be produced, **characterized in that** the shaping head (18; 118) is introduced substantially centrally into the workpiece bore (16) to the dimension of the thread depth (TG), and is then displaced radially outwards along a semicircle or quarter-circle run-in loop (ES) while maintaining the axial position relative to the workpiece bore (16), until, at a peripheral location (SU), it has been pressed into the workpiece to the desired dimension of the flank and/or nominal diameter before the gyrating movement extending over 360° (circular movement BZ) with simultaneous axial advance (BV) is carried out.

2. Process according to Claim 1, **characterized in that** the shaping head (18; 118) has an axial extent (EA) which corresponds to the length (TG) of the screw thread that is to be produced.

3. Process according to Claim 1 or 2, **characterized in that** the arcuate curve when the profile projections (20) enter the workpiece has a movement component in the direction of the subsequent circular movement (BZ).

4. Process according to one of Claims 1 to 3, **characterized in that** the profile projections (20) having the radial extent (ERMIM, ERMAX) which varies over the periphery in each case form a plurality of pressing lands (22) over the periphery.

5. Process according to Claim 4, **characterized in that** the pressing lands (22) are distributed unevenly over the periphery.

6. Process according to Claim 4 or 5, **characterized in that** the pressing lands (122) of adjacent profile projections are offset with respect to one another in the peripheral direction.

7. Process according to Claim 6, **characterized in that** the axially adjacent pressing lands (122) of the shaping head (118) in each case lie along a helix (W) (Figure 3).

8. Process according to one of Claims 1 to 7, **characterized in that** the peripheral velocity of the shaping head (18; 118) in the region of engagement with the workpiece (16) is synchronized with the circular movement.

9. Process according to one of Claims 1 to 7, **characterized in that** the peripheral velocity of the shaping head (18; 118) in the region of engagement with the workpiece (16) is directed oppositely to the circular movement.

## Revendications

1. Procédé pour la réalisation de taraudages au moyen d'un outil de taraudage entraîné en rotation, grâce auquel le pas de taraudage (34) est réalisé sans enlèvement de copeaux, par transformation de pression dans et à partir de la surface interne (16) d'un alésage de pièce à usiner, où l'alésage (34) est formé de telle sorte qu'un outil à tige (10) du type fraiseuse de taraudage avec au moins une saillie profilée (20), équipée préférentiellement de deux saillies profilées (20) écartées d'un espacement constant (T), dans lequel la au moins une saillie profilée (20) sur sa tête de formage (18 ; 118) sur la périphérie avec une extension radiale variable dans la périphérie (ERMIN, ERMAX) est usinée en polygone, l'outil étant tout d'abord introduit dans un point périphérique (SU) de l'alésage de la pièce à usiner (16) dans la pièce à usiner, de préférence il est amené à la pleine profondeur de pression de taraudage et il effectue, essentiellement en maintenant l'excentricité (EX) de l'axe rotatif (14) établie par rapport à l'axe (30) de l'alésage de la pièce à usiner (16), un mouvement circulaire relatif continu de 360° (mouvement circulaire BZ) par rapport à l'axe (30) de l'alésage de la pièce à usiner (16), tandis que la tête de formage (18 ; 118) exécute de façon synchrone un mouvement d'avance relatif axial constant correspondant à la dimension d'incrément de pas à effectuer (P),
**caractérisé en ce que**
la tête de formage (18; 118) est introduite sensiblement de façon centrée dans l'alésage de la pièce à usiner (16) à concurrence de la profondeur de taraudage (TG), elle est translatée consécutivement en maintenant la position relative axiale par rapport à l'alésage de la pièce à usiner (16) le long d'une boucle d'introduction de quart de cercle ou de demi-cercle (ES) radialement vers l'extérieur, jusqu'à ce qu'elle arrive sur un point périphérique (SU) sur la dimension nominale du diamètre de flanc et/ou diamètre nominal dans la pièce à usiner avant d'exécuter un mouvement circulaire de 360° (mouvement circulaire BZ) pour une avance axiale simultanée (BV).

2. Procédé selon la revendication 1, **caractérisé en ce que** la tête de formage (18 ; 118) présente une extension axiale (EA) qui correspond à la longueur (TG) du taraudage à réaliser.

3. Procédé selon la revendication 1 ou 2, **caractérisé en ce que** la courbe en ogive, lors de l'entrée des saillies de profilés (20) dans la pièce à usiner, présente une composante de mouvement en direction du mouvement circulaire consécutif (BZ).

4. Procédé selon l'une des revendications 1 à 3, **caractérisé en ce que** les saillies profilées (20), avec l'extension (ERMIN, ERMAX) radiale se modifiant sur la périphérie, forment respectivement sur la périphérie plusieurs languettes de pressurage (22).

5. Procédé selon la revendication 4, **caractérisé en ce que** les languettes de pressurage (22) sont réparties de façon inégale sur la périphérie.

6. Procédé selon la revendication 4 ou 5, **caractérisé en ce que** les languettes de pressurage (122) de saillies profilées contiguës sont décalées entre elles dans la direction périphérique.

7. Procédé selon la revendication 6, **caractérisé en ce que** les languettes de pressurage contiguës axialement (122) de la tête de formage (118) se situent respectivement le long d'une hélice (W) (Figure 3).

8. Procédé selon l'une des revendications 1 à 7, **caractérisé en ce que** la vitesse périphérique de la tête de formage (18 ; 118) est synchronisée dans la zone d'attaque avec la pièce à usiner (16) avec le mouvement circulaire.

9. Procédé selon l'une des revendications 1 à 7, **caractérisé en ce que** la vitesse périphérique de la tête de formage (18 ; 118) dans la zone d'attaque avec la pièce à usiner (16) est dirigée de manière opposée au mouvement circulaire.
